# EUROPEAN PATENT APPLICATION

(11) **EP 1 873 727 A1**
(43) Date of publication of application: **02.01.2008**
(21) Application number: 06731571.3
(22) Date of filing: 11.04.2006
(51) Int. Cl.: G07F 7/08, G06K 17/00

(54) **ELECTRONIC MONEY TERMINAL**

(30) Priority: 18.04.2005 JP 2005119763
(71) Applicant: Sanden Corporation, Isesaki-shi, Gunma 372-8502 (JP)
(72) Inventor: MATSUMOTO, Naoto c/o SANDEN CORPORATION, Gunma 3728502 (JP)
(74) Representative: Haley, Stephen
(86) International application number: PCT/JP2006/307624
(87) International publication number: WO 2006/115038

(57) **Abstract**

The present invention provides an electronic money terminal which alone can handle multiple types of electronic money services. Since the electronic money terminal has a storage unit 120 for storing a plurality of settlement processing programs each corresponding to one electronic money service, a selection unit 130 for allowing a user to select an electronic money service that is used for settlement processing, and a control unit 150 for causing a settlement processing program to be executed, which corresponds to the electronic money service selected by an input unit 132, the single electronic money terminal can perform settlement processing using the multiple types of electronic money services. As a result, since the number of the electronic money terminals in the entire system can be reduced, costs required to introduce the settlement systems corresponding to the electronic money services can be reduced.

## Description

### Technical field

The present invention relates to an electronic money terminal for performing settlement processing on multiple types of electronic money stored in an IC chip.

### Background art

Conventionally, as this type of electronic money terminal, those have been known that have a reader/writer device for reading/writing data from/to an IC chip, and subtract the value of commodities or services that a user purchased from electronic money stored in the IC chip through the reader/writer device. As an example of such an electronic money terminal, an automatic dispenser, which supports an IC card in which a contactless IC chip is embedded, has been described in Patent Document 1. The automatic dispenser is provided with a reader/writer device, a commodity selection button and a control unit, as well as an encryption processing device, which handles a predetermined electronic money service. Further, the control unit has a CPU and memory, and controls each equipment. The encryption processing device has a CPU, which is different from the above CPU, and intended for encryption processing. When a user purchases a commodity, the encryption processing device uses an encryption algorithm and an encryption key of a predetermined electronic money service to perform encryption processing required for settlement processing to/from the electronic money stored in the user's IC card. As a result, the encryption processing device performs electronic money-specific processing, thus allowing the automatic dispenser to handle the electronic money without changing an existing control system.

However, since encryption algorithms and encryption keys used for sending and receiving encrypted data are different for each electronic money service, one encryption processing device can perform settlement processing of only one electronic money service. That is to say, in order to handle multiple types of electronic money services, one electronic money terminal is required for each electronic money service. Accordingly, when a settlement processing system, which handles multiple types of electronic money services, is built, the number of the electronic money terminals increases with the number of types of the electronic money services corresponding to settlement processing; thus there is a problem that costs of the introduction and operation of the settlement processing system become expensive.
Patent Document 1: Japanese Patent Publication 2000-348241

### Disclosure of the invention

### Problems to be solved by the invention

The present invention is made in view of the above problem, and has an object to provide an electronic money terminal which alone can handle multiple types of electronic money services.

### Means for solving the problems

In order to achieve the above object, in claim 1, the present invention proposes an electronic money terminal, which comprises a reader/writer device for reading and writing data from/to an IC chip in which electronic money, which is used in an electronic money service, is stored, and performs settlement processing of the electronic money stored in the IC chip through the reader/writer device, comprising a storage means for storing a plurality of settlement processing programs each corresponding to one electronic money service, a selection means for allowing a user to select an electronic money service that is used at the time of settlement, and a control means for causing the settlement processing program to be executed, which corresponds to the electric money service selected by the selection means.

According to this electronic money terminal, a plurality of settlement processing programs are stored for a plurality of services associated with electronic money, and the settlement processing program for electronic money service selected by the selection means is executed, allowing a single electronic money terminal to handle multiple types of electronic monies.

In addition, in claim 2, the electronic money terminal according to claim 1 is proposed, said control means performs the control so as to allow the electronic money services associated with a plurality of settlement processing programs stored in the storage means to be selected by selection means.

According to this electronic money terminal, the electronic money services associated with a plurality of settlement processing programs stored in the storage means can be selected by the selection means.

In addition, in claim 3, the electronic money terminal according to claim 2 is proposed, said control means performs the control so as to detect whether or not electronic money for the electronic money service associated with the settlement processing program is stored in the IC chip, for each settlement processing program stored in the storage means, and to allow only the electronic money service associated with the detected electronic money to be selected by the selection means.

According to this electronic money terminal, for each settlement processing program stored in the storage means, whether or not electronic money for the electronic money service associated with the settlement processing program is stored in the IC chip is detected, and only the electronic money service associated with the detected electronic money can be selected by the selection means; thus the electronic money service with which settlement processing can be performed can be selected certainly.

In addition, in claim 4, the electronic money terminal according to claim 2 is proposed, said control means detects whether or not electronic money associated with the electronic money service selected by the selection means is stored in the IC chip, and, only when the electronic money is detected, causes the settlement processing program for the electronic money to be executed.

According to this electronic money terminal, when the reader/writer device enters the writing to IC chip enabled state, the settlement processing program for the electronic money service selected by the selection means is executed, thus settlement processing can be performed quickly.

In addition, in claim 5, the electronic money terminal according to claim 1 is proposed, said control means provides the storage area for the first electronic money on the IC chip when a storage area for the electronic money (first electronic money) associated with the electronic money service selected by the selection means is not provided on the IC chip.

According to this electronic money terminal, when the first electronic money is not stored in the IC chip, the storage area for the first electronic money is provided on the IC chip, thus the first electronic money can be added to the IC chip without issuing a new IC chip.

In addition, in claim 6, the electronic money terminal according to claim 5 is proposed, said control means removes from the IC chip part or all of the electronic money (second electronic money) different from the first electronic money, among the electronic monies stored in the IC chip when a storage area for the first electronic money is provided on the IC chip, if an area required for the storage of the first electronic money cannot be reserved on the IC chip.

According to this electronic money terminal, when the first electronic money is added to the IC chip, if an area required for the storage of the first electronic money cannot be reserved on the IC chip, among the electronic monies stored in the IC chip, part or all of the electronic money (second electronic money) different from the first electronic money can be removed from the IC chip, thus a storage area to which the first electronic money is added can be provided on the IC chip.

In addition, in claim 7, the electronic money terminal according to claim 6 is proposed, comprising a communication device for network connection, wherein the control means reads out the second electronic money to be removed before part or all of the second electronic money is removed from the IC chip, and sends the read electronic money to a predetermined management server through the communication device.

According to this electronic money terminal, when the first electronic money is added to the IC chip, if an area required for the storage of the first electronic money cannot be reserved on the IC chip, the second electronic money to be removed can be transferred to a management server, thus the electronic money of a user is no longer completely removed, and the electronic money stored in the IC chip can be exchanged depending on the usage environment of the electronic money.

In addition, in claim 8, the electronic money terminal according to claim 1 is proposed, comprising a communication device for network connection, wherein the control means stores in the storage means a settlement processing program, which is received from the predetermined management server through the communication device.

According to this electronic money terminal, since a settlement processing program required for settlement processing can be added and updated through a network from the management server, addition of a new service and change in a service can be handled.

In addition, in claim 9, the electronic money terminal according to claim 1 is proposed, said control means performs the control so as to use authentication information stored in the IC chip to authenticate that the user of the IC chip is legitimate prior to providing an electronic money service.

According to this electronic money terminal, since electronic money services are provided only after the legitimacy of the user of the IC chip is authenticated, illegitimate use of the electronic money by a third party can be prevented.

### Advantages of the invention

According to the present invention, since a single electronic money terminal can handle multiple types of electronic money services, the number of the electronic money terminals in the entire system can be reduced. Accordingly, costs of the introduction and operation of the settlement processing system using electronic money can be reduced.

### Brief description of the drawings

Figure 1 is a functional block diagram of an electronic money terminal;
Figure 2 is a diagram for illustrating the memory space of an IC card;
Figure 3 is a diagram showing an example of the memory configuration of the electronic money terminal;
Figure 4 is a diagram showing an example of the data configuration of an electronic money usage history;
Figure 5 is a flowchart for illustrating the operation of the electronic money terminal;
Figure 6 is a flowchart for illustrating the operation of the electronic money terminal;
Figure 7 is a diagram showing an example of the configuration of a management server;
Figure 8 is a flowchart for illustrating the operation of the electronic money terminal; and
Figure 9 is a diagram for illustrating the memory space of an IC card.

### Description of symbols

10 IC card
20 IC card
100 electronic money terminal
110 reader/writer device
120 storage unit
130 selection unit
140 communication device
150 control unit
300 network
400 management server

### Best mode for carrying out the invention

### (First embodiment)

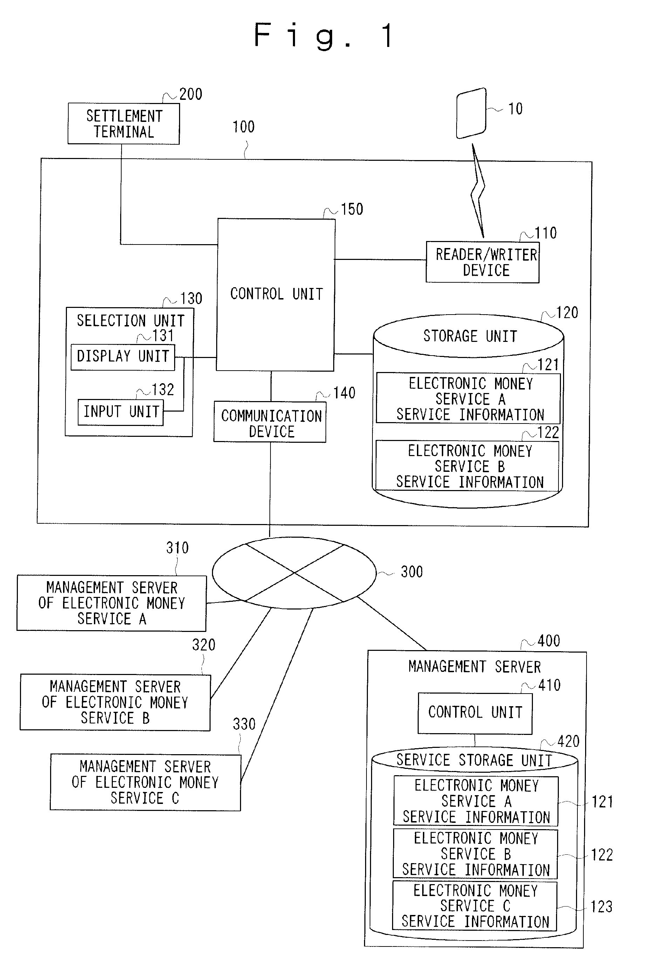

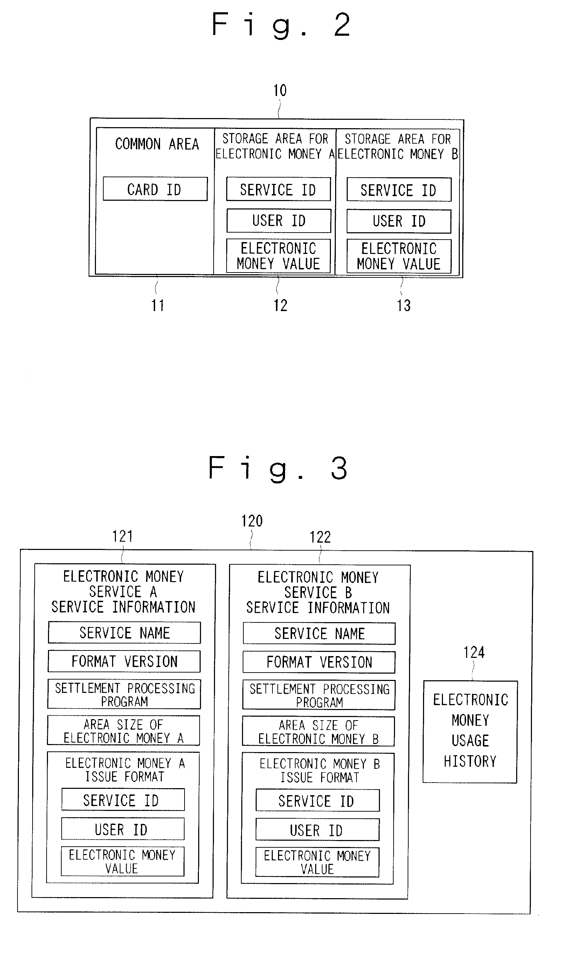

A first embodiment of the present invention will be described below with reference to drawings. Figure 1 is a functional block diagram of an electronic money terminal, and Figure 2 is a diagram for illustrating the memory space of an IC card.

This electronic money terminal 100 is a device for reading and writing the value or the like of electronic money from/to an IC card 10 in which an IC chip for storing electronic money is embedded. As shown in Figure 1, the electronic money terminal 100 is connected to a settlement terminal 200 such as a Point of Sales (POS) terminal, and performs settlement processing based on a transaction amount, which is sent from the settlement terminal 200. Further, the electronic money terminal 100 can communicate through a network 300 with a management server 310 of an electronic money service A, a management server 320 of an electronic money service B, a management server 330 of an electronic money service C and a management server 400, which are described later.

A contactless data readable/writable IC chip is embedded in the IC card 10. The memory space of the IC chip is partitioned into a plurality of storage areas as shown in Figure 2. In the present embodiment, the memory space of the IC chip is partitioned into a common area 11, which can be used in common by a plurality of services that use the IC card 10, a storage area 12 of the electronic money service A and a storage area 13 of the electronic money service B. In the common area 11, a card ID specific to each card, which is assigned to each card, is stored. In each of areas 12 and 13, a service ID specific to each service, which is assigned to each electronic money service, a user ID for identifying a user in each electronic money service and an electronic money value (electronic money balance) are stored. Note that, in the present embodiment, electronic money means information including at least a service ID, a user ID and an electronic money value.

The electronic money terminal 100 comprises a reader/writer device 110 for sending/receiving data to/from the IC card 10, a storage unit 120 for storing each information, a selection unit 130 for selecting an electronic money service or the like that a user uses at the time of settlement, a communication device 140 for network connection such as a router and a modem, and a control unit 150 for controlling each equipment.

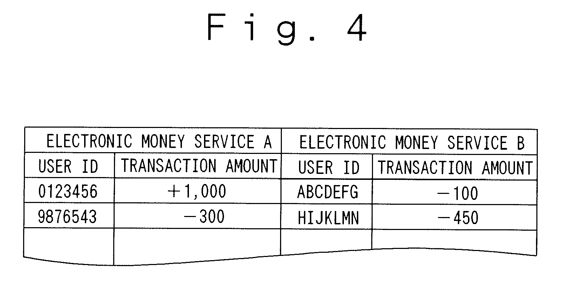

The storage unit 120 is a rewritable memory element such as EEPROMs, and stores service information 121 and service information 122 associated with each of the electronic money services A and B in advance, as shown in Figure 3. Each of service information 121 and service information 122 is comprised of a service name associated with each service, a format version for representing the number of updates due to e.g. addition of functions of electronic money services, a settlement processing program for adding and subtracting the transaction amount to/from electronic money stored in the IC chip of the IC card, an area size of the electronic money required for storage in the IC chip, and an electronic money format including data required to provide electronic money services. The electronic money format is constituted in the same manner as the electronic money. A NULL value is set on a user ID of the electronic money format as an initial value, and 0 is set on the electronic money value as an initial value. Further, each of service information 121 and service information 122 includes a user ID storage unit (not shown) in which the predetermined numbers of unused user IDs (e.g. IDs for 1000 people) for each service are stored. Furthermore, as shown in Figure 4, for each electronic money service, the storage unit 120 stores the user ID of a user who used an electronic money service, and an electronic money usage history 124 constituted by the amounts used or the like.

The selection unit 130 is comprised of a display unit 131 and an input unit 132. Display equipment such as an LCD is used for the display unit 131. Moreover, the transaction amount sent from the settlement terminal 400 to the electronic money terminal 100, the service name of each of service information 121 and service information 122 stored in the storage unit 120, and the electronic money value of each electronic money of the IC card 10 are displayed on the display unit 131. A ten key for entering numbers and selecting an electronic money service to be used, an OK button for entering intent to confirm such as OK, and a cancel button for entering intent to cancel are provided on the input unit 132. Note that the selection unit 130 may be constituted by a touch panel or the like.

The control unit 150 comprises a CPU or the like, and controls the reader/writer device 110, the storage unit 120, the selection unit 130, and the communication device 140 based on the information entered using input unit 132. Further, the control unit 150 causes the settlement processing program for the electronic money service, which was selected by the input unit 132, to be executed to perform settlement processing. Note that the operation of the control unit 150 related to the settlement processing will be described in details later. In addition, the control unit 150 connects to the after-mentioned management server 400 periodically or at any given time, and, when each of service information 121 and service information 122 in the management server 400 is updated, sends a request-to-send for the updated service information to the management server 400. In addition, the control unit 150 sends the request-to-send for the service information (e.g. service information 123) to the management server 400 when there is service information, which is not stored in the storage unit 120 (for example, when there is service information 123, which is not stored in the storage unit 120, as shown in Figure 1). The control unit 150 stores in the storage unit 120 the service information (e.g. service information 123) received from the management server 400 after making a request to send the service information to the management server 400.

The management server 400 is comprised of a control unit 410, a service storage unit 420 or the like, and communicates through a network 300 with the electronic money terminal 100, the management server 310 of the electronic money service A, the management server 320 of the electronic money service B, and the management server 330 of the electronic money service C. Note that each of the management servers 310, 320 and 330 is managed by a business operator which operates the electronic money service A, a business operator which operates the electronic money service B, and a business operator which operates the electronic money service C, respectively. The control unit 410 in the management server 400 stores in the service storage unit 420 the service information 121, service information 122 and service information 123 of each of electronic money services received from management servers 310, 320 and 330 of each electronic money. Further, when receiving the request-to-send for the service information (e.g. service information 123 of the electronic money service C) from the electronic money terminal 100, the control unit 410 uses a public key cryptography or the like to authenticate that the electronic money terminal 100 is a legitimate terminal, then sends the service information 123 to the electronic money terminal 100.

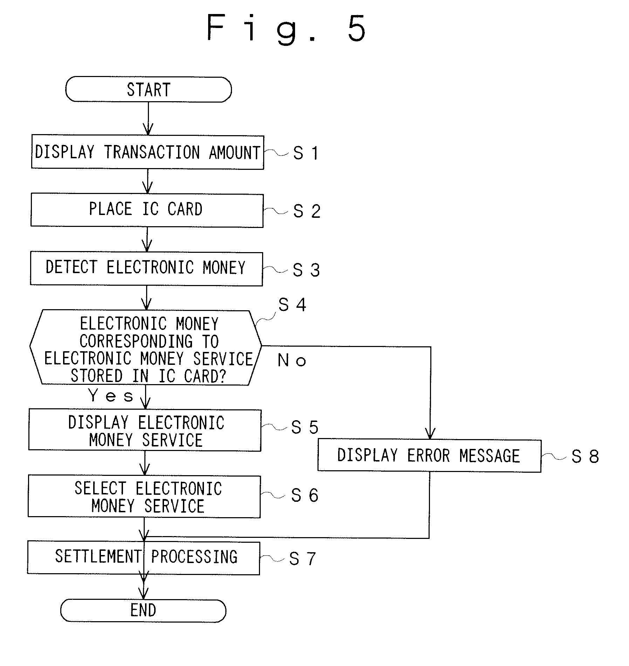

Next, the operation of the electronic money terminal related to the settlement processing will be described with reference to the flowchart of Figure 5. As shown in Figure 5, the control unit 150 in the electronic money terminal 100 first displays the transaction amount, which was received from the settlement terminal 200, on the display 131 of the selection unit 130 (Step S1). Next, a user places the IC card 10, which the user has, at a position where the reader/writer device 110 can read and write (Step S2). The control unit 150 uses each service ID of the service information 121 and service information 122 stored in the storage unit 120 to detect from all the electronic monies stored in the IC card 10, the electronic money assigned with the same service ID, through the reader/writer device 110 (Step S3).

Then when one or more electronic monies have been detected from the IC card 10 (Step S4), the control unit 150 displays on the display unit 131 the service name of the electronic money service associated with the electronic money detected from the IC card 10, and the electronic money value stored in the detected electronic money (Step S5). When the user uses the ten key on the input unit 132 to select an electronic money service to be used among the service names of the electronic money services displayed on the display unit 131 and presses the OK button (Step S6), the control unit 150 causes the settlement processing program for the selected service to be executed among the settlement processing programs of each of electronic money services stored in the storage unit 120 (Step S7). More specifically, through the reader/writer device 110, the control unit 150 uses an authentication key (not shown) to add or subtract only the transaction amount to/from the electronic money value stored in the electronic money service storage area in the IC card 10. Then the control unit 150 properly completes the addition and subtraction, then records the user ID and the transaction amount on the storage unit 120 as an electronic money usage history. Note that when one electronic money was detected from the IC card 10 in Step S5, the user may press the OK button before the control unit 150 causes the settlement processing program for the detected electronic money to be executed.

Further, when the condition of Step S4 is not satisfied, the control unit 150 displays an error message on the display unit 131 (Step S8), and terminates the processing. Note that, although omitted in Figure 5, when the cancel button on the input unit 132 is pressed, or when data reading/writing from/to the IC card 10 fails, the control unit 150 may display an error message on the display unit 131 as necessary, and terminate the processing.

Further, the control unit 150 sends, among the electronic money usage history 124 stored in the storage unit 120, the usage history associated with the electronic money service A to the management server 310 of the electronic money service A, and the usage history associated with the electronic money service B to the management server 320 of the electronic money service B, respectively, at any given time. The management servers 310 and 320 of each of electronic money services store the usage histories, each of which is received from the electronic money terminal 100, in the storage unit (not shown) of each of the management servers 310 and 320.

As described above, since the electronic money terminal of the present embodiment has the storage unit 120, which stores a plurality of settlement processing programs each corresponding to one electronic money service, the selection unit 130 for allowing a user to select the electronic money service used for settlement processing, and the control unit 150 for causing the settlement processing program corresponding to the electronic money service selected by the input unit 132 of the selection unit 130 to be executed, a single electronic money terminal can perform settlement processing using multiple types of electronic money services. Accordingly, the number of the electronic money terminals in the entire system can be reduced, thus the cost required for the introduction of the settlement system corresponding to the electronic money can be reduced.

In addition, since the control unit 150 performs the control so as to allow the electronic money services associated with a plurality of settlement processing programs stored in the storage unit 120 to be selected by the selection unit 130, the electronic money services associated with a plurality of settlement processing programs stored in the storage unit 120 can be selected in order to perform settlement processing. Thus the convenience of users improves.

In addition, since the control unit 150 performs the control so as to detect each electronic money stored in the IC card 10 using the service ID for each electronic money service stored in the storage unit 120, and to allow the electronic money service associated with the detected electronic money to be selected by the input unit 132 of the selection unit 130, the user can select only electronic money stored in the IC card 10 and the storage unit 120. Thus the user can easily grasp the type of the electronic money stored in the IC chip.

In addition, since the communication device 140 is provided for network connection, and the control unit 150 stores in the storage unit 120 settlement processing programs or the like received from the management server 400 through the communication device 140, update processing due to e.g. addition of functions of electronic money services, and settlement processing programs or the like associated with new types electronic money services can be received through the network. Accordingly, there is no need to recover and modify the electronic money terminal 100 to add a settlement processing program or the like, thus the operational cost of the electronic money terminal can be reduced.

### (Second embodiment)

An electronic money terminal according to a second embodiment of the present invention will be described. The difference of the present invention from the first embodiment is that the electronic money services stored in the storage unit 120 can be selected by the selection unit 130 whether or not the electronic money is stored in the IC card 10. Accordingly, procedure of reading and writing from/to the IC card 10 is different from that of the first embodiment. Since, elsewhere, the configuration and operation are identical to those of the first embodiment, only the difference will be described here.

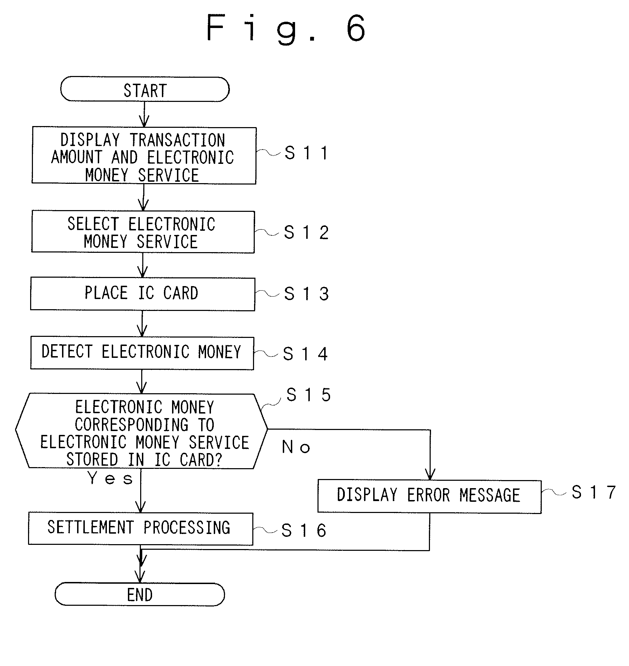

The operation of the electronic money terminal 100 according to the present embodiment will be described with reference to the flowchart of Figure 6. As shown in Figure 6, the control unit 150 in the electronic money terminal 100 displays on the display unit 131 the service names of the service information 121 and service information 122 associated with all the electronic money services stored in the storage unit 120 together with the transaction amount received from a settlement terminal 200 (Step S11).

After using the ten key on the input unit 132 to select a service to be used, and pressing the OK button (Step S12), the user places the IC card 10 at a position where the reader/writer device 110 can read and write (Step S13). Then the control unit 150 connects to the IC card 10 through the reader/writer device 110, and detects the electronic money associated with the electronic money service selected by the ten key on the input unit 132 among electronic monies stored in the IC card 10 (Step S14). More specifically, the control unit 150 uses the service ID of the electronic money service entered using the input unit 132 among the service information 121 and service information 122 of each electronic money service stored in the storage unit 120 to connect to the IC card 10 through the reader/writer device 110. Then the control unit 150 detects from all the electronic monies stored in the IC card 10, the electronic money assigned with the same service ID as the service ID of the electronic money service entered using the input unit 132.

Then when the electronic money having the same service ID is detected from the IC card 10 (Step S15), the control unit 150 causes the settlement processing program for the electronic money having the service ID to be executed, among the settlement processing programs stored in the storage unit 120 (Step S16). On the other hand, when the condition of Step S15 is not satisfied, the control unit 150 displays an error message on the display unit 131 (Step S17), and terminates the processing.

As described above, according to the electronic money terminal of the present invention, the control unit 150 detects whether or not the electronic money associated with the electronic money service selected by the input unit 132 of the selection unit 130 is stored in the IC chip, and, only when the selected electronic money is detected, causes the settlement processing program for the selected electronic money to be executed, thus the settlement processing program for the selected electronic money service is executed when the IC card 10 is placed at a position where the reader/writer device 110 can read and write. Thus settlement processing can be performed quickly. In addition, when a contactless IC card is used, the settlement processing is performed solely by selecting the electronic money and then bringing the contactless IC card near the reader/writer device 110, thus the settlement can be performed easily and in the shortest time, which particularly advantageous.

### (Third embodiment)

An electronic money terminal according to a third embodiment of the present invention will be described. A difference of the present embodiment from the first and second embodiments is that electronic money associated with the electronic money service selected by the selection unit 130 can be added to the IC card 10. In addition, if an area required to add new electronic money cannot be reserved in the IC card 10, the electronic money terminal according to the present embodiment can transfer one or more electronic monies stored in the IC card 10 to the management server 400. Since, elsewhere, the configuration and operation are identical to those of the first and second embodiments, only the difference will be described here.

In addition to the above embodiment, the input unit 132 of the selection unit 130 according to the present embodiment has an addition button for storing in the IC card 10 the electronic money associated with the electronic money service selected with the ten key or the like, and a transfer button for transferring the selected electronic money from the IC card 10 to the management server 400.

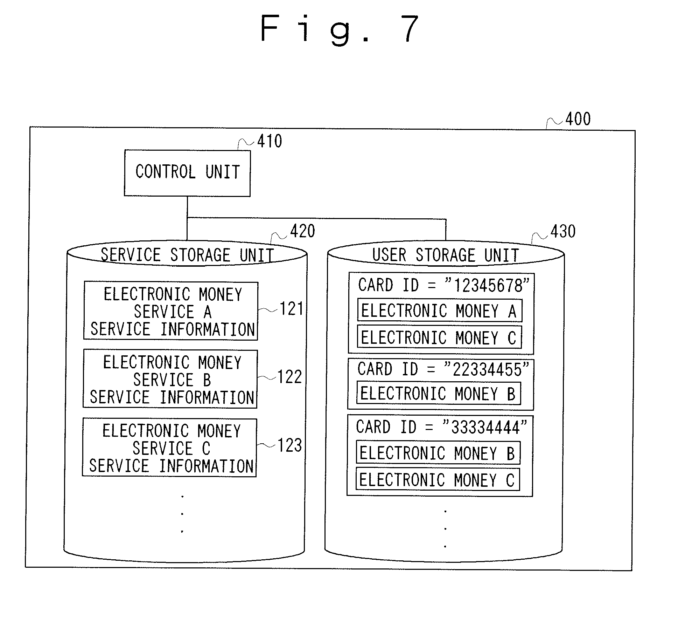

In addition, as shown in Figure 7, the management server 400 according to the present embodiment has a user storage unit 430 in addition to the configuration of the above embodiment. When receiving an electronic money storage request together with a card ID and electronic money through the network 130 from the electronic money terminal 100, the control unit 410 stores the electronic money and the card ID in the user storage unit 430. On the other hand, when receiving an electronic money sending request together with a card ID from the electronic money terminal 100, the control unit 410 uses a public key cryptography or the like to authenticate that the electronic money terminal 100 is a legitimate terminal, detects electronic money stored in the user storage unit 430 together with the same card ID as the received card ID, and sends the detected electronic money to the electronic money terminal 100.

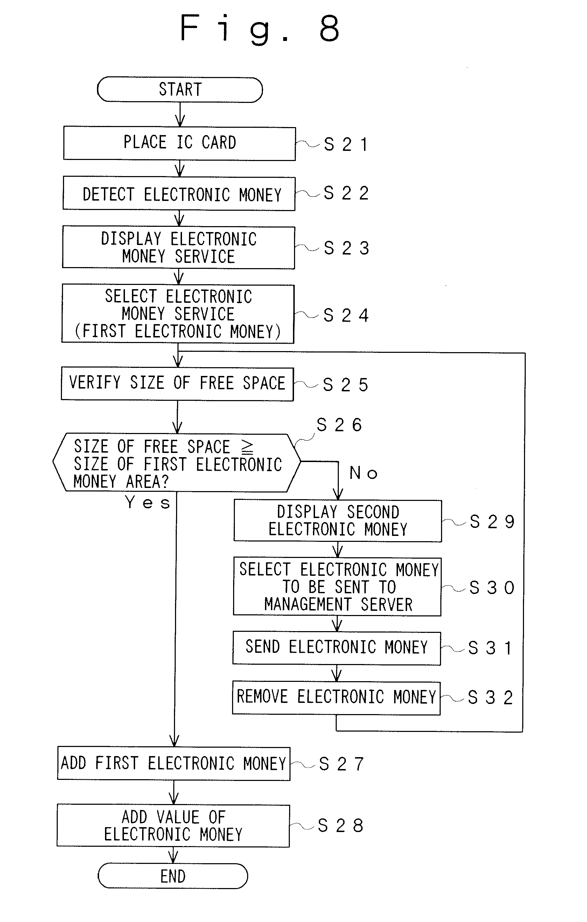

The operation of the electronic money terminal 100 according to the present embodiment will be described with reference to the flowchart of Figure 8. Note that describing first the outline of the operation, the control unit 150 compares the size of the free space of the IC card 10 with the size of the area for the electronic money selected by a user to determine whether or not the electronic money selected by the user is added to the IC card 10. In addition, after adding electronic money to the IC card 10, the control unit 150 receives from the settlement terminal 200 a value corresponding to the deposit amount of the user, and stores the received value in the electronic money value of the IC card 10.

First, as shown in Figure 8, the user places the IC card 10 at a position where the reader/writer device 110 can read and write (Step S21). Next, the control unit 150 detects one or more electronic monies stored in the IC card 10 (Step S22). More specifically, the control unit 150 connects to the IC card 10 through the reader/writer device 110. In addition, the control unit 150 uses the service ID of each of service information 121 and service information 122 stored in the storage unit 120 to detect electronic money having the same service ID from all the electronic monies stored in the IC card 10. Then the control unit 150 reads out the card ID stored in the IC card 10 and the electronic money value of the detected electronic money. As a result, the electronic money stored in the IC card 10 is detected. Then the control unit 150 displays on the display unit 131 the electronic money that can be added to the IC card 10 (Step S23). More specifically, the control unit 150 sends the card ID read from the IC card 10 together with an electronic money sending request to the management server 400, and receives from the management server 400 one or more electronic monies stored in the user storage unit 430 for the card ID. Then the control unit 150 uses the service ID of the electronic money among all the electronic monies stored in the storage unit 120 to extract the service ID of each electronic money received from the management server 400, and electronic money having a service ID different from the service ID assigned to each electronic money detected in Step S22. The reason for extracting the electronic money that satisfies the above condition among all the electronic monies stored in the storage unit 120 is to prevent the same type of electronic money from being redundantly stored in the IC card 10. Then the control unit 150 displays on the display unit 131 the service name of each extracted electronic money and the service name of each electronic money received from the management server 400. For example, when the electronic money A1 of the electronic money service A is stored in the IC card 10, the electronic monies A2, B2 and C2 of the electronic money services A, B and C are stored in the storage unit 120, and the electronic money C3 of the electronic money service C is stored in the management server 400, only the electronic money B2 is displayed on the display unit 131. Note that when the service name of each electronic money received from the management server 400 is displayed on the display unit 131, the electronic money value of the electronic money may be displayed simultaneously.

Then the user uses the ten key on the input unit 132 to select electronic money to be added to the IC card 10, and presses the addition button (Step S24). Then the control unit 150 subtracts from the total memory capacity of the IC card 10 the sum of the sizes of all the electronic monies stored in the IC card 10 to determine the size of the free space of the IC card 10 in order to add the selected electronic money (first electronic money) to the IC card 10 (Step S25). When the size of the free space of the IC card 10 is equal to or larger than the size of the area for the first electronic money (Step S26), the control unit 150 adds the electronic money associated with the first electronic money to the IC chip (Step S27). More specifically, if the first electronic money is electronic money stored in the storage unit 120, the control unit 150 stores in the IC card 10 the issue format of the first electronic money stored in the storage unit 120. At this time, the control unit 150 reads out one unused user ID from the user ID storage unit of the first electronic money stored in the storage unit 120, and stores the read unused user ID in the user ID of the first electronic money stored in the IC card 10. On the other hand, if the first electronic money is the electronic money received from the management server 400, the control unit 150 adds the received electronic money to the IC card 10. Then the control unit 150 adds the first electronic money value to the IC card 10 (Step S28). More specifically, the control unit 150 receives the electronic money value of the first electronic money corresponding to the amount of money that the user deposits from the settlement terminal 200, and adds the value to the electronic money value of the first electronic money stored in the IC card 10 through the reader/writer device 110.

When the condition of the step S26 is not satisfied, the control unit 150 displays on the display unit 131 the service name associated with all the electronic monies (second electronic money) stored in the IC card 10 (Step S29). The user uses the ten key on the input unit 131 to select among the services displayed on the display unit 131 one or more electronic monies which are temporarily stored in the management server 400, and presses the transfer button (Step S30). After reading out the selected electronic money and the card ID from the IC card 10, the control unit 150 sends the selected electronic money and the card ID to the management server 400 through the network 300 from the communication device 140 (Step S31). Note that the control unit 410 in the management server 400 stores the electronic money received in Step S30 from the electronic money terminal in the storage unit 420 by card ID. Then, removing the sent electronic money from the IC card 10 (Step S32), the control unit 150 obtains the size of the free space of the IC card 10 (Step S25) to determine whether or not the condition of Step S26 is satisfied.

As described above, according to the electronic money terminal of the present embodiment, if a storage area for electronic money (first electronic money) associated with the electronic money service selected by the selection unit 130 is not provided on the IC card 10, the control unit 150 provides the storage area for the electronic money on the IC card 10, thus the first electronic money can be added to the IC card 10 without issuing a new IC card 10. Accordingly, the cost of issuance of the IC card 10 included in the settlement processing system can be kept low, thus the cost reduction of the settlement processing system can be achieved.

In addition, when the storage area for the first electronic money is provided on the IC card 10, if an area required for the storage of the electronic money cannot be reserved on the IC card 10, the control unit 150 removes from the IC card 10 part or all of the electronic money (second electronic money) different from the first electronic money among the electronic monies stored in the IC card 10, thus electronic monies that are no longer needed can be removed from the IC card 10. Accordingly, the need to own a plurality of IC cards which store electronic monies that are no longer needed disappears, thus the convenience of users improves.

In addition, the communication device 140 for network connection is provided, and the control unit 150 reads out the second electronic money to be removed before removing part or all of the second electronic money from the IC card 10, and sends the read electronic money to the management server 400 through the communication device 140, thus the electronic money of a user is no longer completely removed, and electronic money stored in the IC card 10 can be exchanged depending on the usage environment of the electronic money. Thus the convenience of users improves.

### (Fourth embodiment)

An electronic money terminal according to a fourth embodiment of the present invention will be described. A difference of the present embodiment from the first to third embodiments is that user authentication is performed prior to settlement processing using each electronic money service. Since, elsewhere, the configuration and operation are identical to those of the first to third embodiments, only the differences will be described here.

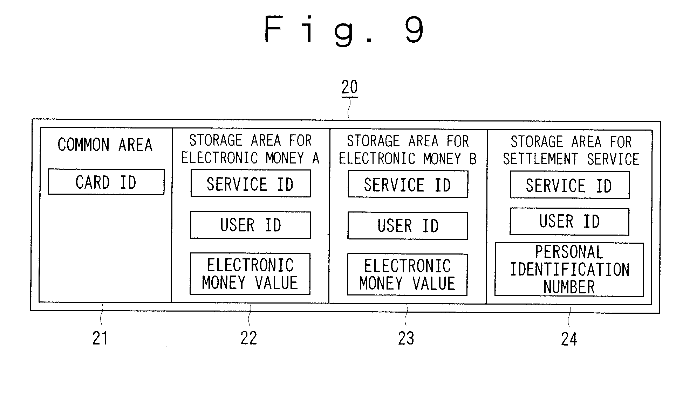

A contactless data readable/writable IC chip is embedded in the IC card 20. The memory space of the IC card 20 is partitioned into a common area 21, storage areas 22 and 23 of the electronic money services A and B, and a storage area 24 of the settlement service as shown in Figure 9. Here, the settlement service means a service in which a user uses the electronic money terminal 100. A service ID, a user ID and a personal identification number are stored in the storage area 24 of the settlement service. The control unit 150 of the electronic money terminal 100 authenticates a user prior to providing each electronic money service. More specifically, when the user enters his/her personal identification number in the input unit 132 of the selection unit 130, the control unit 150 determines whether or not the personal identification number entered using the input unit 132 matches with a personal identification number read from the settlement service of the IC card 20 through the reader/writer device 110, and, only when they match, performs one operation among the operations of first to third embodiments. Note that the control unit 150 may send the personal identification number entered using the input unit 132 of the selection unit 130 to the IC card 20 through the reader/writer device 110 to cause the IC card 20 to determine the personal identification number.

As described above, according to the electronic money terminal of the present embodiment, since a personal identification number stored in the IC card 20 is used to authenticate that the user of the IC card 20 is legitimate, then the settlement processing electronic money service can be provided to the specific user, illegitimate use of the electronic money by a third party can be prevented.

Note that although, in the present embodiment, those in which the control is performed in such a ways that each electronic money service can be selected by the selection unit 130 after authenticating that the user of the IC chip is legitimate has been described, authentication may be performed immediately before a settlement processing program associated with the electronic money service is executed.

Note that, although, in the above embodiments, a contactless communicable IC card in which an IC chip is embedded has been described, the IC chip may be mounted on a mobile telephone, a wristwatch, a PDA or the like.

In addition, although, in the above embodiment, a contactless type IC chip has been used as a medium for storing the electronic money for the electronic money service, the present invention may be applied to a case where a contact type IC chip is used.

## Claims

1. An electronic money terminal, which comprises a reader/writer device for reading and writing data from/to an IC chip in which electronic money, which is used in an electronic money service, is stored, and performs settlement processing of the electronic money stored in the IC chip through the reader/writer device, comprising:
storage means for storing a plurality of settlement processing programs each corresponding to one electronic money service;
selection means for allowing a user to select an electronic money service used at the time of settlement; and
control means for causing the settlement processing program to be executed, which corresponds to the electronic money service selected by the selection means.

2. The electronic money terminal according to claim 1, said control means performs the control so as to allow the electronic money services associated with a plurality of settlement processing programs stored in the storage means to be selected by the selection means.

3. The electronic money terminal according to claim 2, said control means performs the control so as to detect whether or not electronic money for the electronic money service associated with the settlement processing program is stored in the IC chip, for each settlement processing program stored in the storage means, and to allow only the electronic money service associated with the detected electronic money to be selected by the selection means.

4. The electronic money terminal according to claim 2, said control means detects whether or not electronic money associated with the electronic money service selected by the selection means is stored in the IC chip, and, only when the electronic money is detected, causes the settlement processing program for the electronic money to be executed.

5. The electronic money terminal according to claim 1, said control means provides a storage area for a first electronic money on the IC chip when the storage area for the electronic money (first electronic money) associated with the electronic money service selected by the selection means is not provided on the IC chip.

6. The electronic money terminal according to claim 5, said control means removes from the IC chip part or all of the electronic money (second electronic money) different from the first electronic money, among the electronic monies stored in the IC chip when the storage area for the first electronic money is provided on the IC chip, if an area required for the storage of the first electronic money cannot be reserved on the IC chip.

7. The electronic money terminal according to claim 6 comprising:
a communication device for network connection,
wherein the control means reads out the second electronic money to be removed before part or all of the second electronic money is removed from the IC chip, and sends the read electronic money to a predetermined management server through the communication device.

8. The electronic money terminal according to claim 1 comprising:
a communication device for network connection,
wherein the control means stores in the storage means the settlement processing program, which is received from the predetermined management server through the communication device.

9. The electronic money terminal according to claim 1, said control means performs the control so as to use authentication information stored in the IC chip to authenticate that the user of the IC chip is legitimate prior to providing an electronic money service.
